# EUROPEAN PATENT APPLICATION

(11) **EP 2 136 150 A1**
(43) Date of publication of application: **23.12.2009**
(21) Application number: 08738753.6
(22) Date of filing: 24.03.2008
(51) Int. Cl.: F24H 1/18, F24H 1/00, F24H 9/00, F28D 1/047, F28D 1/06, F28F 13/08

(54) **HEAT PUMP TYPE HOT WATER SUPPLY APPARATUS**

(30) Priority: 27.03.2007 JP 2007081210; 18.03.2008 JP 2008069674
(71) Applicant: Daikin Industries, Ltd., Osaka 530-8323 (JP)
(72) Inventor: FURUI, Syuuji, Sakai-shi Osaka 591-8511 (JP); NUMATA, Mitsuharu, Sakai-shi Osaka 591-8511 (JP)
(74) Representative: HOFFMANN EITLE
(86) International application number: PCT/JP2008/055414
(87) International publication number: WO 2008/123185

(57) **Abstract**

A heat pump type hot water supply apparatus includes a heat-source side heat pump unit 2 for heating water, a hot water tank 1 for storing therein hot water heated by the heat-source side heat pump unit 2, and a hot water supply heat exchanger 10 which is placed in the hot water tank 1 and in which water flows from lower side toward upper side of interior thereof. There is provided a difference between heat exchange performance of a lower-stage side portion 10b and heat exchange performance of an upper-stage side portion 10a of the hot water supply heat exchanger 10.

## Description

### TECHNICAL FIELD

The present invention relates to heat pump type hot water supply apparatuses for heating water in a hot water tank by a heat pump unit and for heating, by the heated water in the hot water tank, water flowing through within a hot water supply heat exchanger placed in the hot water tank with a view to supplying hot water.

### BACKGROUND ART

Conventionally, there has been provided a heat pump type hot water supplier which includes a heat pump unit for heating water, and a hot water tank for storing hot water heated by the heat pump unit, to fulfill heating and hot water supply by utilizing the hot water stored in the hot water tank (see, e.g., JP 2006-329581 A).

While the heat pump type hot water supply apparatus described above is so designed that hot water stored in the hot water tank is outputted as it is, another heat pump type hot water supply apparatus is also available in which a hot water supply heat exchanger is placed within the hot water tank in terms of hygienics or the like so that hot water is outputted from a water supply port through the hot water supply heat exchanger. Such a heat pump type hot water supply apparatus using a hot water supply heat exchanger has a problem that it is difficult to realize a hot water supply heat exchanger capable of fulfilling efficient heat exchange between the hot water within the hot water tank and the supplied hot water.

### SUMMARY OF INVENTION

### TECHNICAL PROBLEM

The present invention having been accomplished in view of these and other problems, an object thereof is to provide a heat pump type hot water supply apparatus, as well as a heating and hot water supply apparatus using the heat pump type hot water supply apparatus, which is capable of improving heat exchange efficiency of the hot water supply heat exchanger with a simple construction and supplying high-temperature hot water.

### SOLUTION TO PROBLEM

In order to achieve the above object, the present invention provides heat pump type hot water supply apparatuses having the following effective solutions.

The heat pump type hot water supply apparatus of the invention comprises:
a heat-source side heat pump unit for heating water;
a hot water tank for storing therein hot water heated by the heat-source side heat pump unit; and
a hot water supply heat exchanger which is placed in the hot water tank and in which water flows from lower side toward upper side of interior thereof, wherein
there is provided a difference between heat exchange performance of a lower-stage side portion and heat exchange performance of an upper-stage side portion of the hot water supply heat exchanger.

According to the above structure, in the hot water tank in which hot water heated by the heat pump unit is stored, under a state that the temperature distribution of hot water gradually increases from lower side toward upper side, lower-temperature hot water that has flowed from the lower side of the hot water supply heat exchanger is heat-exchanged in a hot water region of relatively lower temperature on the lower side within the hot water tank. Then, as the hot water flows toward the upper side within the hot water supply heat exchanger, the hot water is heat-exchanged in a hot water region of higher temperature on the upper side within the hot water tank. Thus, high-temperature supply hot water is discharged out. As shown above, supply hot water, while being heated by heat exchange, flows from lower side toward upper side according to the temperature gradient within the hot water tank, so that there occurs no disturbance of the temperature distribution within the hot water tank, allowing a high heat exchange efficiency to be obtained. Further, with a large temperature gradient provided along the vertical direction within the hot water tank, lower-temperature water on the lower side in the hot water tank is heated by the heat pump unit, by which a COP (Coefficient Of Performance) of the heat pump unit can be improved. Thus, the temperature gradient in the vertical direction within the hot water tank is increased as much as possible, so that heating performance as a hot water supply apparatus can be increased as much as possible.

Also, for example, by making the heat exchange performance of the lower-stage side portion higher than the heat exchange performance of the upper-stage side portion of the hot water supply heat exchanger, temperature increases in the hot water region on the lower side within the hot water tank is suppressed, by which the COP of the heat pump unit is further improved. Also, conversely, by making the heat exchange performance of the upper-stage side portion of the hot water supply heat exchanger higher than the heat exchange performance of the lower-stage side portion, the heat source in the upper-side higher-temperature region of hot water stored in the hot water tank can be effectively utilized for hot water supply while a large temperature gradient is provided in the vertical direction within the hot water tank.

One embodiment comprises:
the heat-source side heat pump unit having a radiative heat exchanger for condensing a refrigerant to radiate heat derived from the refrigerant; and
a hot water supply unit including: the hot water tank in which water is stored; water circulation pipes which are communicated with bottom side and top side of the hot water tank and which allow water in the hot water tank to be circulated from the bottom side to the top side in a bypass state; an endothermic heat exchanger which is placed on way of the water circulation pipes and which is heat-absorbably coupled to the radiative heat exchanger of the heat-source side heat pump unit; and the hot water supply heat exchanger which is of an annular coil type and allows water to flow, from outside, in thereinto and out therefrom in a flow-through state, wherein
the water in the hot water tank is heated by the radiative heat exchanger of the heat-source side heat pump unit via the endothermic heat exchanger provided on the way of the water circulation pipes, while the water to be heated flowing within the hot water supply heat exchanger is heated by the water in the hot water tank.

According to this embodiment, water supplied from the bottom side of the hot water tank is heated by the radiative heat exchanger of the heat-source side heat pump unit via the endothermic heat exchanger on the way of the water circulation pipes and turned back to the top side of the hot water tank, by which a temperature gradient (higher temperature on the upper side and lower temperature on the lower side) in the vertical direction within the hot water tank can be easily provided.

In one embodiment, inner-surface machined tubes are used for annular-coil heat transfer tubes of either one of the lower-stage side portion or the upper-stage side portion of the hot water supply heat exchanger, whereby a heat transfer rate of heat-transfer-tube part of either one of the lower-stage side portion or the upper-stage side portion is set higher than a heat transfer rate of the other of the lower-stage side portion and the upper-stage side portion.

According to this embodiment, by using an inner-surface machined tube for an annular-coil heat transfer tube in the lower-stage side portion of the hot water supply heat exchanger, cooling performance (endothermic performance) for the stored water of the annular-coil part in the lower-stage side portion of the hot water supply heat exchanger is improved by the high heat transfer performance of the inner-surface machined tubes, so that the temperature of the stored water in the lower-stage side portion is more easily lowered.

As a result of this, the temperature of the stored water flowing through within the hot-water-supply-unit side endothermic heat exchanger corresponding to the heat-pump-unit side radiative heat exchanger can be lowered to a corresponding extent, so that an effective temperature difference from the condensed refrigerant of the heat-pump-unit side radiative heat exchanger can be ensured.

Alternatively, by using an inner-surface machined tube for an annular-coil heat transfer tube in the upper-stage side portion of the hot water supply heat exchanger so that the heat transfer rate of the annular-coil heat-transfer-tube portion in the upper-stage side portion is improved, the heat source of the higher-temperature region on the upper side in the hot water tank can be effectively utilized for hot water supply.

In one embodiment, an annular-coil heat transfer tube of either one of the lower-stage side portion or the upper-stage side portion of the hot water supply heat exchanger are set smaller in inner diameter than an annular-coil heat transfer tube of the other portion so that a flow velocity of water flowing through inside the heat transfer tube of the either one is enhanced, whereby a heat transfer rate of heat-transfer-tube part of the either one of the lower-stage side portion or the upper-stage side portion is improved over a heat transfer rate of the other of the lower-stage side portion (10b) and the upper-stage side portion.

According to this embodiment, since an annular-coil heat transfer tube in the lower-stage side portion of the hot water supply heat exchanger is smaller in inner diameter than an annular-coil heat transfer tube in the upper-stage side portion so that the flow velocity of fluid flowing through inside the heat transfer tube of the lower-stage side portion is higher than that of the upper-stage side portion, the heat transfer rate of heat-transfer-tube part of the lower-stage side portion is improved, by which the cooling performance (endothermic performance) for the stored water of the annular-coil part in the lower-stage side portion is improved, making the temperature of the stored water in the lower-stage side portion more easily lowered.

As a result of this, the temperature of the stored water flowing through within the hot-water-supply-unit side endothermic heat exchanger corresponding to the heat-pump-unit side radiative heat exchanger can be lowered to a corresponding extent, so that an effective temperature difference from the condensed refrigerant of the heat-pump-unit side radiative heat exchanger can be ensured.

Alternatively, by making an annular-coil heat transfer tube in the upper-stage side portion of the hot water supply heat exchanger smaller in inner diameter than an annular-coil heat transfer tube in the lower-stage side portion so that the flow velocity of water flowing through inside the heat transfer tube of the upper-stage side portion is made higher, the heat transfer rate of heat-transfer-tube part of the annular coil in the upper-stage side portion is improved, so that the heat source of the higher-temperature region on the upper side in the hot water tank can be effectively utilized for hot water supply.

In one embodiment, an annular-coil winding pitch of either one of the lower-stage side portion or the upper-stage side portion of the hot water supply heat exchanger is set smaller than an annular-coil winding pitch of the other portion, whereby an annular-coil heat transfer area of the either one of the lower-stage side portion or the upper-stage side portion is set larger than an annular-coil heat transfer area of the other of the lower-stage side portion and the upper-stage side portion.

According to this embodiment, since the annular-coil winding pitch in the lower-stage side portion of the hot water supply heat exchanger is smaller than the annular-coil winding pitch in the upper-stage side portion, the annular-coil heat transfer area of the lower-stage side portion is larger than the annular-coil heat transfer area of the upper-stage side portion. Thus, the cooling performance (endothermic performance) for the stored water of the annular-coil part in the lower-stage side portion is improved, so that the temperature of the stored water in the lower-stage side portion is more easily lowered.

As a result of this, the temperature of the stored water flowing through within the hot-water-supply-unit side endothermic heat exchanger corresponding to the heat-pump-unit side radiative heat exchanger can be lowered to a corresponding extent, so that an effective temperature difference from the condensed refrigerant of the heat-pump-unit side radiative heat exchanger can be ensured.

Alternatively, by making the annular-coil winding pitch in the upper-stage side portion of the hot water supply heat exchanger smaller than the annular-coil winding pitch in the lower-stage side portion so that the annular-coil heat transfer area of the upper-stage side portion is larger than the annular-coil heat transfer area of the lower-stage side portion, the heat source of the higher-temperature region on the upper side in the hot water tank can be effectively utilized for hot water supply.

In one embodiment, a lower part of the annular coil in the lower-stage side portion of the hot water supply heat exchanger gradually decreases in annular-coil outer diameter so as to be wound into a helical state.

According to this embodiment, with a setting that a lower part of the annular coil in the lower-stage side portion of the hot water supply heat exchanger gradually decreases in outer diameter so as to be wound into a spiral state, a hypothetic bottom-face side opening surface of the annular coil of the lower-stage side portion is closed with the annular coil of the lower part converged downward. As a result of this, natural convection of the stored water from below to above and from above to below is blocked, so that the water temperature on the bottom side in the hot water tank is less easily increased, allowing a lowering of water temperature to be achieved effectively.

Therefore, when this function is combined with functions fulfilled by the heat pump type hot water supply apparatus having any of the constructions described above, it becomes possible to more effectively lower the bottom-portion temperature in the hot water tank.

As a result of this, the temperature of the stored water in the bottom portion is easily lowered, so that the temperature of the stored water flowing through within the hot-water-supply-unit side endothermic heat exchanger corresponding to the heat-pump-unit side radiative heat exchanger can be lowered more effectively. Thus, a sufficiently effective temperature difference from the condensed refrigerant of the radiative heat exchanger can be ensured.

In one embodiment, a lower part of the annular coil in the lower-stage side portion of the hot water supply heat exchanger gradually decreases in annular-coil outer diameter so as to be wound into a planar spiral state.

According to this embodiment, with a setting that a lower part of the annular coil in the lower-stage side portion of the hot water supply heat exchanger gradually decreases in annular-coil outer diameter so as to be wound into a planar spiral state, a hypothetic bottom-face side opening surface of the annular coil of the lower-stage side portion is closed with the annular coil of the lower part converged in a plan view. As a result of this, natural convection of the stored water W₀ from below to above and from above to below is blocked, so that the water temperature on the bottom side in the hot water tank is less easily increased, allowing a lowering of water temperature to be achieved.

Therefore, when this function is combined with functions fulfilled by the heat pump type hot water supply apparatus having any of the constructions described above, it becomes possible to more effectively lower the bottom-portion temperature in the hot water tank.

As a result of this, the temperature of the stored water in the bottom portion is even more easily lowered, so that the temperature of the stored water flowing through within the hot-water-supply-unit side endothermic heat exchanger corresponding to the heat-pump-unit side radiative heat exchanger can be lowered more effectively. Thus, a sufficiently effective temperature difference from the condensed refrigerant of the radiative heat exchanger can be ensured.

In one embodiment, heat exchange performance of the lower-stage side portion of the hot water supply heat exchanger is set higher than heat exchange performance of the upper-stage side portion.

According to this embodiment, the cooling performance (endothermic performance) for the stored water in the lower-stage side portion of the vertically-extending annular-coil type hot water supply heat exchanger becomes higher than that of the upper-stage side portion, so that the temperature of the stored water in the lower-stage side portion is more easily lowered.

As a result of this, the temperature of the stored water flowing through within the hot-water-supply-unit side endothermic heat exchanger corresponding to the heat-pump-unit side radiative heat exchanger can be lowered to a corresponding extent, so that an effective temperature difference from the condensed refrigerant of the heat-pump-unit side radiative heat exchanger can be ensured.

### ADVANTAGEOUS EFFECTS OF INVENTION

As apparent from the above description, according to the heat pump type hot water supply apparatus of the invention, the heat exchange efficiency of the hot water supply heat exchanger can be improved with a simple construction, making it implementable to realize a heat pump type hot water supply apparatus capable of supplying high-temperature hot water.

### BRIEF DESCRIPTION OF DRAWINGS

Fig. 1 is a view showing a construction of a heat pump type hot water supply apparatus according to a first embodiment of the present invention;
Fig. 2 is a sectional view taken along the line II - II of Fig. 1;
Fig. 3 is a partial perspective view showing an internal structure of a main part of a heat exchanger within the hot water tank shown in Fig. 1;
Fig. 4 is a view showing a construction of a heat pump type hot water supply apparatus according to a second embodiment of the invention;
Fig. 5 is a view showing a construction of a heat pump type hot water supply apparatus according to a third embodiment of the invention;
Fig. 6 is a view showing a construction of modification 2 of the heat pump type hot water supply apparatus according to the third embodiment;
Fig. 7 is a view showing a construction of a heat pump type hot water supply apparatus according to a development example under discussion by the present inventor et al.; and
Fig. 8 is an explanatory view showing problems and solutions of the heat pump type hot water supply apparatus.

### DESCRIPTION OF EMBODIMENTS

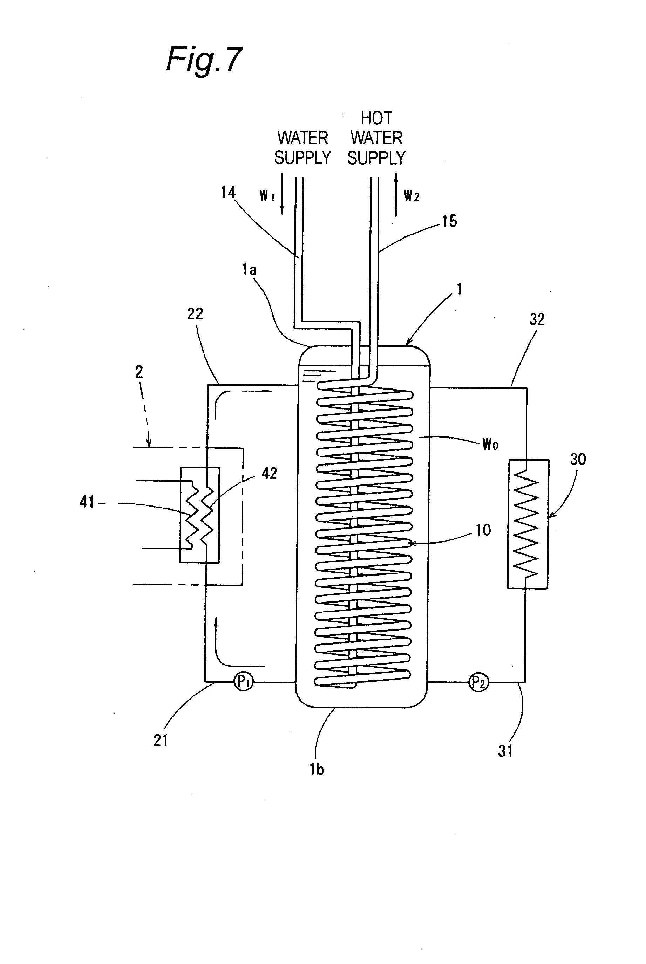

Before description of embodiments of the present invention proceeds, a basic construction of a heat pump type hot water supply apparatus according to a development example under discussion by the present inventor et al. is first explained with reference to Fig. 7.

In the heat pump type hot water supply apparatus of Fig. 7, a hot water tank 1 and an endothermic heat exchanger 42 on a hot water supply unit side are connected to each other in a bypass state by two water circulation pipes, a lower-position side water circulation pipe 21 with a first water pump P₁ interposed thereon and a higher-position side water circulation pipe 22. Stored water W₀ at a bottom portion of the hot water tank 1 is supplied by the first water pump P₁ in a circulatory state to the endothermic heat exchanger 42 provided in correspondence to a radiation-side heat exchanger 41 on a heat pump unit 2 side so that the water is circulated for a specified time duration via the endothermic heat exchanger 42 to make the stored water W₀ heated to a desired temperature (e.g., around 85°C).

In the hot water tank 1, on the other hand, a heat transfer tube of a hot water supply heat exchanger 10 first enters from a top 1a side of the hot water tank 1 straight to a bottom 1b side, and then helically turns and extends from the bottom 1b side toward the top 1a side, thus being set up in a U-turn placement. Thus, the heat transfer tube is formed into an annular coil structure with its diameter uniform in a vertical or up/down direction, as a whole.

Then, water W₁ coming from an external water supply pipe 14 flows in a flow-through state into the heat transfer tube of the above structure, during which the water is effectively heated while flowing in the turning direction for prolonged time, resulting in hot water W₂ of the above-mentioned desired temperature that flows out through a hot water supply pipe 15.

On the other hand, reference sign 30 denotes a radiator as a radiative heat exchanger for indoor space heating installed close to an indoor wall surface as an example. A hot water inlet port of the radiator 30 is connected to the top 1a of the hot water tank 1 via a hot water inlet pipe 32, while the other hot water outlet port is connected to the bottom 1b of the hot water tank 1 via a hot water outlet pipe 31. As a result of this, heat of the hot water introduced from the top 1a side of the hot water tank 1 by a second water pump P₂ is radiated into the indoor space by the radiator 30 to fulfill effective heating action.

In such a case as shown above, in the radiative heat exchanger 41 on the heat pump unit 2 side and the endothermic heat exchanger 42 on the hot water supply unit side, heating efficiency for the water W₀ to be heated increases more and more with increasing temperature differences between a condensed refrigerant and the water W₀ to be heated.

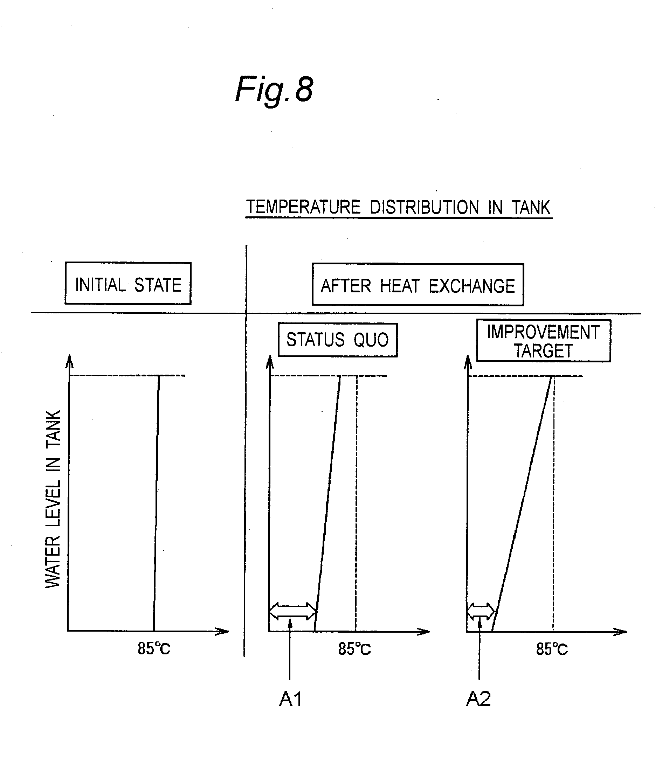

However, with the construction of Fig. 7, there is a problem that a temperature distribution of water in the vertical direction within the hot water tank 1 is uniformized by natural convection of the stored water (water to be heated) W₀ in the hot water tank 1. For example, as shown in a temperature gradient graph captioned as "status quo" in Fig. 8, because of a gentle temperature gradient, lower-portion temperatures are higher, leading to a higher temperature of water incoming into the heat pump unit 2 (see A1 of Fig. 8). Due to this, it would be impossible to allow for a large temperature difference of the endothermic heat exchanger 42 side stored water W₀ from the condensed refrigerant of the heat pump unit 2 side radiative heat exchanger 41, incurring a limitation on improvement of the heating performance as a heat pump hot water supply apparatus.

In order to improve this limitation and achieve an effective improvement of the heating performance, it becomes necessary to, as shown by "improvement target" in the graph of Fig. 8 as an example, improve the vertical temperature distribution of water within the hot water tank 1 so that the temperature of water on the lower portion side in the hot water tank 1 is lowered as much as possible to enlarge the temperature gradient against the upper portion side temperature (see A2 in Fig. 8).

Hereinbelow, several embodiments of the present invention considered as best for carrying out the invention will be given as examples and described in detail.

### (First Embodiment)

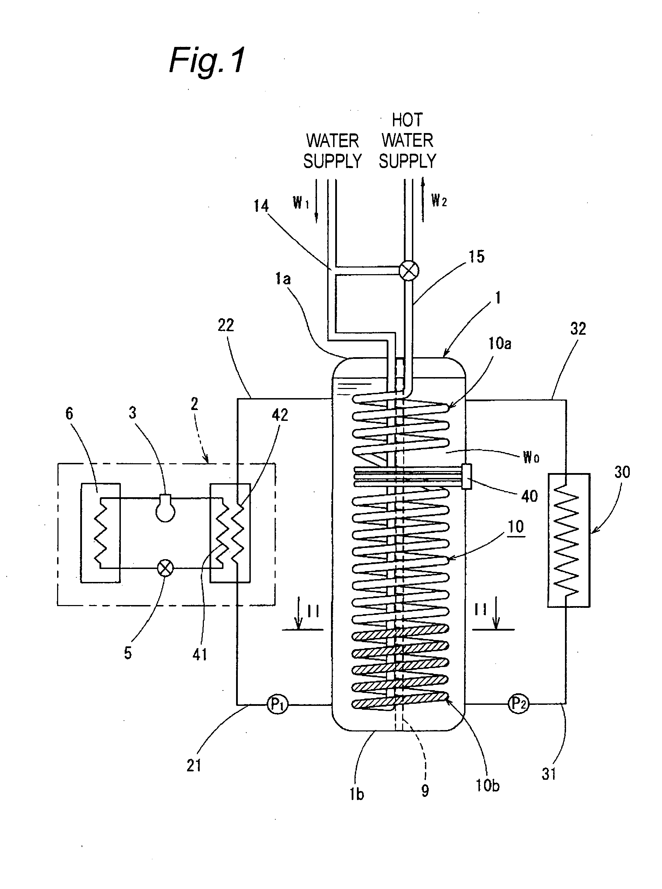

First, Fig. 1 shows a construction of a heating and hot water supply apparatus using a heat pump type hot water supply apparatus according to a first embodiment of the invention. This heating and hot water supply apparatus is constituted by a hot water supply unit which includes a hot water tank 1, a hot water supply heat exchanger 10 and an endothermic heat exchanger 42; a heat pump unit 2 which includes a compressor 3, a radiative heat exchanger 41, an expansion valve 5 and an endothermic heat exchanger 6; and a radiator 30 as an example of a heating terminal, and the like.

The hot water tank 1 has a longitudinally elongate cylindrical-shaped closed housing in which water W₀ is internally stored generally up to a vicinity of an upper end while the later-described hot water supply heat exchanger 10 is placed over a range from a top 1a to a bottom 1b.

The hot water supply heat exchanger 10 is so constructed that a heat transfer tube of a specified diameter is first inserted from the top 1a side of the hot water tank 1 straight toward the bottom 1b side and then, while being helically turned, extended in a coil form from the bottom 1b side toward the top 1a side so as to be in a U-turn placement, thus being formed into an annular coil structure as a whole with its diameter substantially constant vertically. Further, the hot water supply heat exchanger 10 is erectly housed in the hot water tank 1, in which an annular-coil end portion of an upper-stage side portion 10a of the hot water supply heat exchanger 10 is connected to the external hot water supply pipe 15, while an upper end portion of the straight tube is connected to an external water supply pipe 14.

Accordingly, water coming along the water supply pipe 14, after flowing down to a lower end portion of the straight tube, flows in a flow-through state from a lower-stage side portion 10b of the annular coil toward the upper-stage side portion 10a, while turning and taking prolonged time, where the water is heat-exchanged efficiently with the water W₀ contained in the hot water tank 1 during the flow within the annular coil so as to be increased in temperature (up to, e.g., around 85°C). The water is then taken out as hot water W₂ through the hot water supply pipe 15, being offered for desired use.

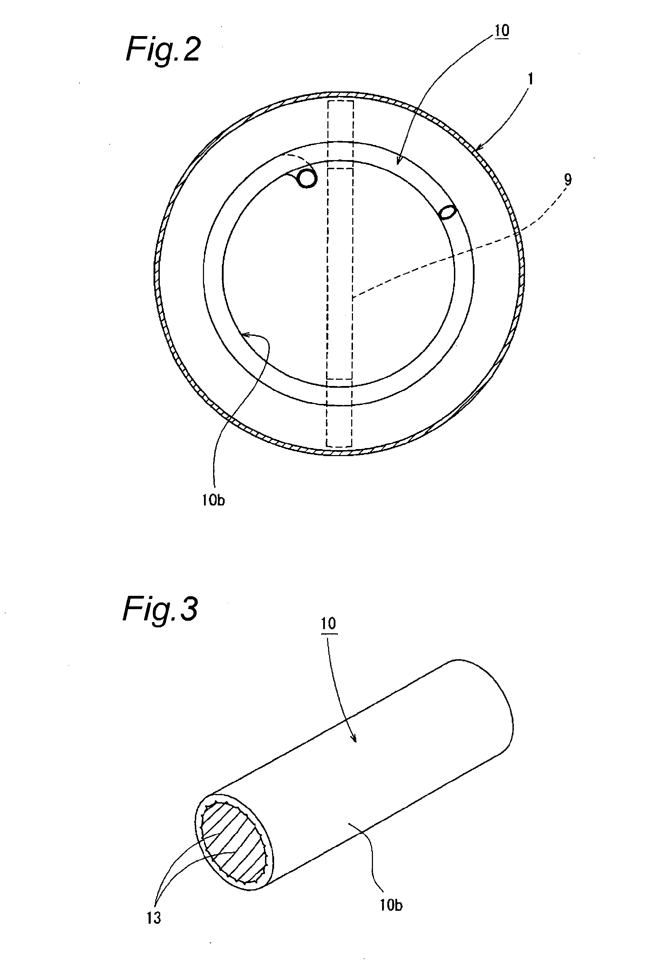

In this embodiment, out of the above-described annular coil (heat transfer tube) of the hot water supply heat exchanger 10, only a part of its lower-stage side portion 10b ranging over a specified vertical length (e.g., five turns from below hatched in Fig. 1) is formed by such inner-surface machined tubes (inner-surface grooved tubes) as shown in Fig. 3, in which helical recessed grooves 13, 13, ... are formed in its inner circumferential surface so as to provide higher heat transfer performance than in the other part (upper stage side). In addition, the other part (upper stage side) is formed by ordinary inner-surface plain tubes having no recessed grooves.

Further, within the hot water tank 1, a baffle (baffle plate) 9 formed by a porous plate such as a punched plate is so placed as to, in a plan view, divide an interior of the hot water tank 1 diametrically into two as shown in Fig. 2 as an example and, in a side view, stretch from the top 1a to the bottom 1b of the hot water tank 1 as shown in Fig. 1 as an example. Thus, by the placement of the baffle 9, the hot water tank 1 is provided in a coupled structure of a pair of semi-cylindrical tanks having half-reduced lateral widths.

Meanwhile, the heat pump unit 2 serves as a heat source for the water W₀ stored in the hot water tank 1 and includes a compressor 3 for compressing a refrigerant, a radiative heat exchanger 41 for condensing the compressed refrigerant to radiate heat, an expansion valve 5 for expanding the condensed refrigerant, and an endothermic heat exchanger 6 for evaporating the refrigerant and absorbing heat from the air.

The endothermic heat exchanger 42 is connected to the bottom 1b side of the hot water tank 1 by the lower-position side water circulation pipe 21, and moreover connected to the top 1a side of the hot water tank 1 by the higher-position side water circulation pipe 22. Stored water W₀ that has flowed from the bottom 1b side of the hot water tank 1 through the lower-position side water circulation pipe 21 into the endothermic heat exchanger 42, which is provided in correspondence to the radiative heat exchanger 41, is heated by heat exchange with the endothermic heat exchanger 42. Then, the heated and temperature-increased stored water W₀ is made to flow back toward the top 1a side of the hot water tank 1 through the higher-position side water circulation pipe 22. By repetition of this cycle, the water W₀ in the hot water tank 1 is heated to a specified temperature (e.g., around 85°C as described above).

On the other hand, reference sign 30 denotes a radiator as a radiative heat exchanger for use of indoor space heating installed close to an indoor wall surface as an example. The hot water inlet port of the radiator 30 is connected to the top 1a of the hot water tank 1 via the hot water inlet pipe 32, while the other hot water outlet port is connected to the bottom 1b of the hot water tank 1 via the hot water outlet pipe 31. Heat of the hot water introduced from the top 1a side of the hot water tank 1 by the second water pump P₂ as an example of a circulating pump is radiated into the indoor space by the radiator 30 with a view to fulfilling effective heating action.

In addition, an auxiliary heater 40 is mounted at a rather upper position on a trunk portion of the hot water tank 1. In the case where the water temperature of the stored water W₀ within the hot water tank 1 heated by the heat pump unit 2 is lower than a specified value so as not to rise up to a set water temperature or where particularly high temperature hot water is needed, or in another case where drive of the heat pump unit 2 is not required but auxiliary heating is desired for constant temperature (heat retention), the auxiliary heater 40 is to be activated on to heat the stored water W₀.

Next, operations and functional effects of the heat pump type hot water supply apparatus according to this embodiment constructed as described above are explained.

Water W₀ stored in the hot water tank 1 is circulated in a bypass state from bottom side to top side via the lower-position side water circulation pipe 21, the higher-position side water circulation pipe 22 and the endothermic heat exchanger 42 so as to be heated to a desired temperature (around 85°C) by the radiative heat exchanger 41 on the heat pump unit 2 side.

On the other hand, supply hot water W₁ supplied from the water supply pipe 14 to the hot water supply heat exchanger 10 under the condition that the water W₀ within the hot water tank 1 has been at a desired temperature (85°C), while flowing through from upper portion to lower portion and from lower portion to upper portion of the hot water supply heat exchanger 10, is heat-exchanged with the temperature-increased water W₀ within the hot water tank 1 so as to become hot water W₂ of a desired temperature (e.g., 42°C), and supplied to, for example, places for use of the hot water such as a bath or a kitchen through the hot water supply pipe 15.

In a case where room heating is done by using the radiator 30, the hot water W₀ of high temperature (85°C) on the upper portion side of the hot water tank 1 is introduced to the radiator 30 side, being circulated and radiated.

As already described, in the heat pump unit 2, the heating efficiency increases more and more with increasing differences between the temperature of the condensed refrigerant in the radiative heat exchanger 41 and the temperature of the stored water W₀ introduced from the bottom 1b side of the hot water tank 1 into the endothermic heat exchanger 42. Therefore, for enhancement of the heating efficiency of the heat pump unit 2, the temperature distribution of the stored water W₀ in the hot water tank 1 needs to be maintained at higher temperatures on the top 1a side of the hot water tank 1 and as low temperatures as possible on the bottom 1b side, as shown in the improvement example in Fig. 8.

However, the water W₀ in the hot water tank 1 tends to be uniformized in its vertical temperature distribution due to temperature uniformization action by natural convection. Under this condition as it is, there is a limitation in enhancing the heating efficiency of the heat pump unit 2.

In the case of the heating and hot water supply apparatus in this embodiment, however, by virtue of the above-described construction, it is implementable to further lower the water temperature on the bottom 1b side of the hot water tank 1, which allows higher-temperature hot water to be obtained stably.

That is, with the above construction, first of all, the lower-stage side portion 10b of the hot water supply heat exchanger 10 is formed by such inner-surface machined tubes (e.g., inner-surface grooved tubes) of particularly high heat transfer performance as shown in Fig. 3.

When the lower-stage side portion 10b of the hot water supply heat exchanger 10 is formed by inner-surface machined tubes as shown above, the heat transfer rate associated with the stored water W₀ in the lower-stage side portion 10b is improved by an increase of heat transfer area and by disturbance of flow of the water W₁ flowing inside the lower-stage side portion 10b. As a result, an amount of heat absorption (amount of heat removal) from the stored water W₀ on the lower portion side of the hot water tank 1 is increased, so that the water temperature of the stored water W₀ is suppressed low to an extent corresponding to an increase of the heat absorption amount.

As a consequence, a further larger temperature difference between the condensed refrigerant in the radiative heat exchanger 41 on the heat pump unit 2 side and the stored water W₀ flowing inside the endothermic heat exchanger 42 can be obtained, so that the heating performance as a heat pump type hot water supply apparatus is further improved.

Also with the above construction, in the hot water tank 1 is provided the baffle 9 that extends longitudinally so as to divide the interior of the hot water tank 1 diametrically into two.

Given such a construction, the hot water tank 1 becomes larger in aspect ratio artificially, facilitating the formation of temperature stratification (higher temperatures in upper layer portion and lower temperatures in lower layer portion) in the vertical direction within the hot water tank 1, so that the uniformization of water temperatures within the hot water tank 1 is suppressed. Accordingly, the water temperature on the bottom 1b side of the hot water tank 1 is maintained lower, making it possible to allow for a larger temperature difference between the condensed refrigerant in the radiative heat exchanger 41 on the heat pump unit 2 side and the stored water W₀ flowing inside the endothermic heat exchanger 42.

Therefore, the heating performance of the heat pump unit 2 is improved, so that the temperature of the stored water W₀ on the top 1a side of the hot water tank 1 can be made even higher, allowing higher-temperature hot water W₂ to be taken out stably through the hot water supply pipe 15 by heat exchange of high efficiency with the high-temperature stored water W₀.

Further, by the presence of the baffle 9, the temperature stratification on the other-side semi-cylindrical portion becomes less easily disturbed even during the above-described heating operation.

It is noted that the radiator 30, the baffle 9, the auxiliary heater 40 and the like for heating use in the above description are not necessarily essential components for the present invention and, needless to say, are given only for enhanced functions and generality of the invention.

As shown above, according to the heat pump type hot water supply apparatus described above, in the hot water tank 1 in which hot water heated by the heat pump unit 2 is stored, under a state that the temperature distribution of hot water gradually increases from lower side toward upper side, lower-temperature hot water that has flowed in from the lower side of the hot water supply heat exchanger 10 is heat-exchanged in a hot water region of relatively lower temperature on the lower side within the hot water tank 1. Then, as the hot water flows inside the hot water supply heat exchanger 10 toward its upper side, the hot water is heat-exchanged in a hot water region of higher temperature on the upper side within the hot water tank 1. Thus, high-temperature supply hot water is discharged out. As shown above, supply hot water, while being heated by heat exchange, flows from lower side toward upper side according to the temperature gradient within the hot water tank 1. Accordingly, there occurs no disturbance of the temperature distribution within the hot water tank 1 so that a high heat exchange efficiency can be obtained. Further, with a large temperature gradient provided in the vertical direction within the hot water tank 1, low-temperature water on the lower side in the hot water tank 1 is heated by the heat pump unit, by which the COP (Coefficient Of Performance) of the heat pump unit is improved. Thus, the temperature gradient in the vertical direction within the hot water tank 1 is increased as much as possible, so that heating performance as a hot water supply apparatus can be increased as much as possible.

Also, by making the heat exchange performance of the lower-stage side portion 10b of the hot water supply heat exchanger 10 higher than the heat exchange performance of the upper-stage side portion 10a, temperature increases in the hot water region on the lower side within the hot water tank 1 is suppressed, by which the COP of the heat pump unit 2 is further improved.

### (Second Embodiment)

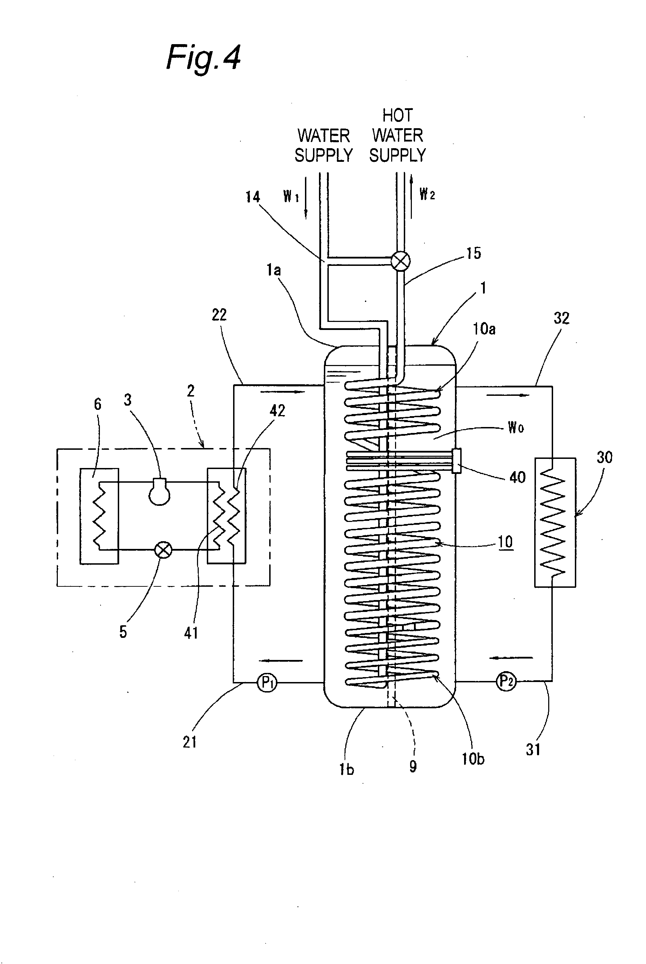

Next, Fig. 4 shows a construction of a heating and hot water supply apparatus using a heat pump type hot water supply apparatus according to a second embodiment of the invention. This heating and hot water supply apparatus is basically similar in construction to the heating and hot water supply apparatus of the first embodiment, but differs therefrom in that a tube diameter of the lower-stage side portion 10b of the hot water supply heat exchanger 10 is set thinner than a tube diameter of the other upper-stage side portion 10a, whereas the heating and hot water supply apparatus of the first embodiment is so set that the entire range from the upper-stage side portion 10a to the lower-stage side portion 10b is equal in tube diameter.

With this construction, in the lower-stage side portion 10b of the hot water supply heat exchanger 10, water W₁ flows through inside thereof at higher flow velocity, making the heat transfer rate to be improved correspondingly so that the amount of heat absorption (amount of heat removal) from the stored water W₀ on the bottom 1b side of the hot water tank 1 is increased. Thus, the water temperature of the stored water W₀ is suppressed lower by an extent corresponding to the increase of the heat absorption amount (heat removal amount).

As a consequence, a further larger temperature difference between the condensed refrigerant in the radiative heat exchanger 41 on the heat pump unit 2 side and the stored water W₀ flowing inside the endothermic heat exchanger 42 can be obtained. Thus, the heating performance of the heat pump unit 2 is further improved so that the heating performance as a heat pump type hot water supply apparatus is further improved.

It is noted that the construction and functional effects other than those described above are similar to those of the first embodiment and, with their relevant descriptions of the first embodiment incorporated also into the second embodiment, their detailed description is omitted here.

### (Third Embodiment)

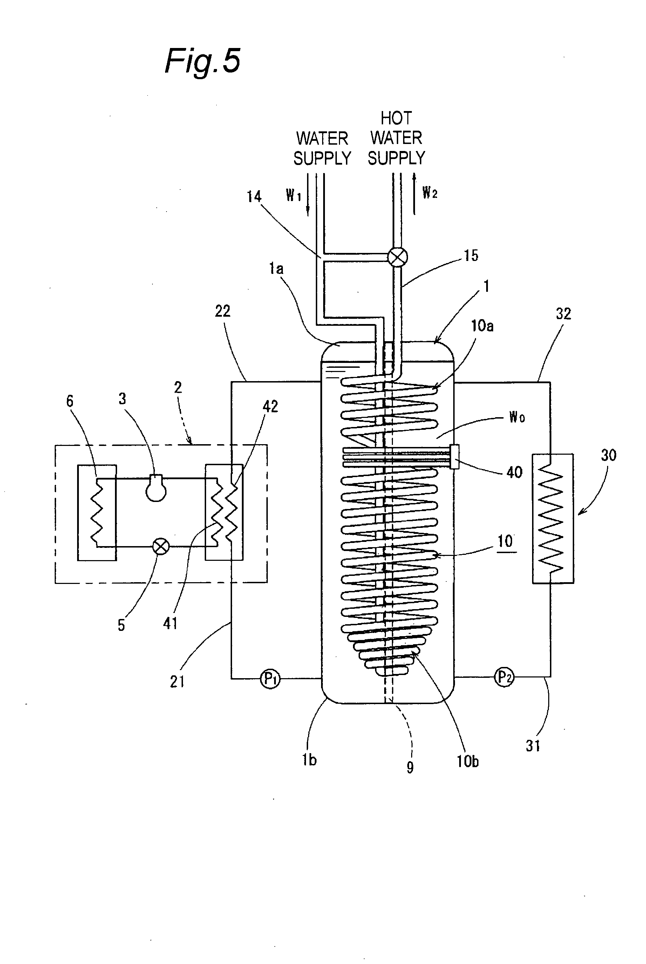

Next, Fig. 5 shows a construction of a heating and hot water supply apparatus using a heat pump type hot water supply apparatus according to a third embodiment of the invention. This heating and hot water supply apparatus is also similar in basic construction to the heating and hot water supply apparatus of the first embodiment. However, their difference is that whereas the heating and hot water supply apparatus of the first embodiment is so set that the entire range from upper end to lower end of the hot water supply heat exchanger 10 is uniform in a coil-portion pitch as well as in an outer diameter of its heat-transfer-tube coil portion, the coil portion in this embodiment is formed in such a helical state that the pitch of the coil portion is smaller in the lower-stage side portion 10b than in the upper-stage side portion 10a and moreover the outer diameter of the coil portion is so reduced as to gradually decrease toward the lower end.

With such a construction, in the lower-stage side portion 10b of the hot water supply heat exchanger 10, the heat transfer rate is improved by an increase of the heat transfer area due to compactness of the heat-transfer-tube coiled tube portion, so that the amount of heat absorption (amount of heat removal) from the stored water present on the lower-portion side of the hot water tank 1 is increased while the resulting high-density portion functions as a baffle of the vertical opening surface. As a result, natural convection of the stored water W₀ in the hot water tank 1 is suppressed, allowing the temperature stratification to be maintained as it is. By synergism of these features, water temperature of the stored water W₀ on the lower-portion side of the hot water tank 1 is suppressed as low as possible.

As a consequence, a further larger temperature difference between the condensed refrigerant in the radiative heat exchanger 41 on the heat pump unit 2 side and the stored water W₀ flowing inside the endothermic heat exchanger 42 can be obtained. Thus, the heating performance of the heat pump unit 2 is improved so that the heating performance as a hot water supply apparatus is further improved.

It is noted that the construction and functional effects other than those described above are similar to those of the first embodiment and, with their relevant descriptions of the first embodiment incorporated also into the third embodiment, their detailed description is omitted here.

### (Modification 1)

As a construction that the heat-transfer-tube coil portion is coiled with its outer diameter reduced so that the coil portion is given a baffle function, it is also possible, not only to provide such a helical coiling as shown above, but to provide a coiling of a planar spiral state by reducing the outer diameter of the heat-transfer-tube coil toward the center-axis direction in a planar position.

Thus, with the coiling of a planar spiral state given by a setting that the lower portion of the heat-transfer-tube coil portion in the lower-stage side portion 10b of the hot water supply heat exchanger 10 is gradually decreased in the outer diameter of the coil, the bottom-face side virtual opening surface of the coil of the lower-stage side portion 10b is closed with the heat-transfer tube coil portion planarly converged. As a result of this, natural convection of the stored water W₀ from below to above and from above to below is effectively blocked, so that the water temperature on the bottom side in the hot water tank 1 is less easily increased, allowing a lowering of water temperature to be achieved effectively.

### (Modification 2)

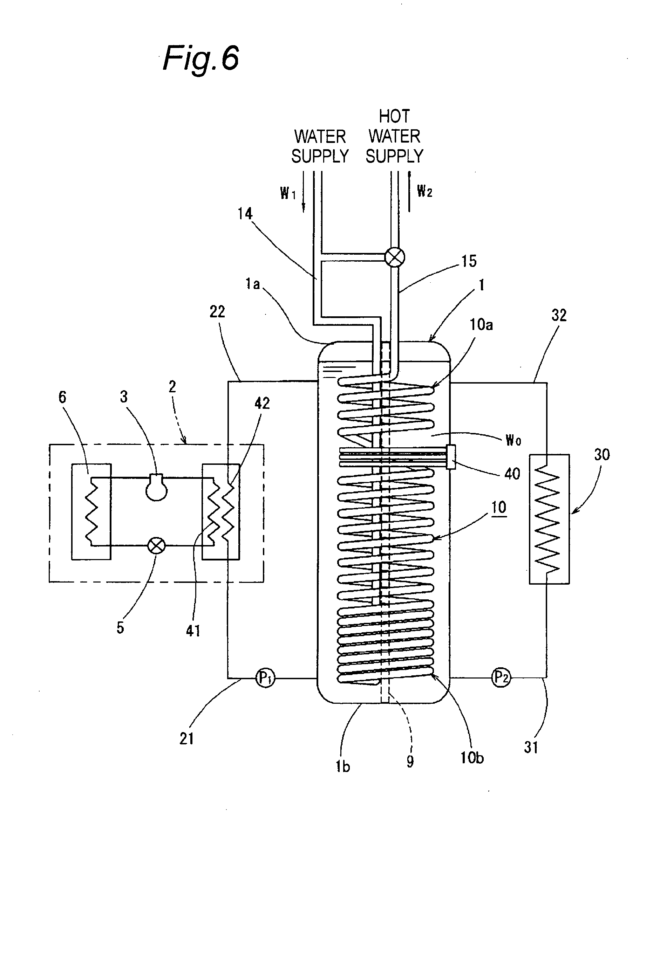

Also in this third embodiment, in the lower-stage side portion 10b of the hot water supply heat exchanger 10, both pitch and outer diameter of its heat-transfer-tube coil portion are varied. As another embodiment, however, without varying the outer diameter itself of the heat-transfer-tube coil, it is also allowable that only the pitch of the lower-stage side portion of the heat-transfer-tube coil portion is set smaller than that of the upper-stage side portion 10a as shown in Fig. 6 as an example.

Further, in the hot water region of relatively low temperature on the lower side within the hot water tank 1, the pitch of the coiled pipes of the hot water supply heat exchanger 10 is set denser, making the heat exchange power enhanced, so that temperature increases in the hot water region on the lower side within the hot water tank 1 are suppressed. As a result of this, a larger temperature gradient between upper portion and lower portion in the hot water tank 1 is provided, and the lower-temperature water on the lower side in the hot water tank 1 is heated by the heat pump unit 2, so that the COP of the heat pump unit 2 can be improved.

Moreover, converse to this, it is also allowable to provide a setting that only the outer diameter of the coil portion is varied.

By these constructions as well, the heat exchange performance on the lower-portion side can be enhanced, so that the water temperature on the bottom portion side of the hot water tank 1 can be lowered.

In the above-described first to third embodiments, the heat exchange performance of the lower-stage side portion 10b of the hot water supply heat exchanger 10 is set higher than the heat exchange performance of the upper-stage side portion 10a. However, without being limited to this, the heat exchange performance of the upper-stage side portion of the hot water supply heat exchanger may be made higher than the heat exchange performance of the lower-stage side portion. In this case, while a larger temperature gradient is provided in the vertical direction within the hot water tank, the heat source in the upper-side higher-temperature region of hot water stored in the hot water tank can be effectively utilized.

In the foregoing first and second embodiments, the water that has flowed from the top portion of the hot water tank 1 is let to flow from lower side toward upper side of the hot water supply heat exchanger 10. However, water that has flowed in from the lower portion of the hot water tank may be supplied to the hot water supply heat exchanger.

Also, the heat pump type hot water supply apparatus of this invention comprises: a heat-source side heat pump unit having a radiative heat exchanger 41 for condensing a refrigerant to radiate heat derived from the refrigerant; and a hot water supply unit composed of a hot water tank 1 for storing water W₀ therein, water circulation pipes 21, 22 which are communicated with bottom 1b side and top 1a side of the hot water tank 1 and which circulate the water W₀ contained in the hot water tank 1 from the bottom 1b side toward the top 1a side in a bypass state, an endothermic heat exchanger 42 which is provided on way of the water circulation pipes 21, 22 and which is heat-absorbably coupled to the radiative heat exchanger 41 of the heat-source side heat pump unit, and an annular coil type hot water supply heat exchanger 10 which extends from the top 1a side toward the bottom 1b side, as well as from the bottom 1b side toward the top 1a side, in the hot water tank 1 so as to be placed in a U-turn placement, and which allows water W₁ to flow thereinto from outside and flow out therefrom in a flow-through state, wherein the water W₀ in the hot water tank 1 is heated by the radiative heat exchanger 41 of the heat-source side heat pump unit via the endothermic heat exchanger 42 provided on the way of the water circulation pipes 21, 22, while the water W₁ to be heated flowing within the hot water supply heat exchanger 10 is heated by the water W₀ in the hot water tank 1, and wherein the lower-stage side portion 10b of the hot water supply heat exchanger 10 is higher in heat exchange performance than the upper-stage side portion 10a.

With such a construction, cooling performance (endothermic performance) for the stored water W₀ of the lower-stage side portion 10b of the vertically-extending annular-coil type hot water supply heat exchanger 10 is higher than that of the upper-stage side portion, so that the temperature of the stored water W₀ in the lower-stage side portion 10b is more easily lowered.

As a result of this, the temperature of the stored water W₀ flowing through within the hot-water-supply-unit side endothermic heat exchanger 42 corresponding to the heat-pump-unit side radiative heat exchanger 41 can be lowered to a corresponding extent, so that an effective temperature difference from the condensed refrigerant of the heat-pump-unit side radiative heat exchanger 41 can be ensured.

Also, in the heat pump type hot water supply apparatus of this invention, a high heat exchange performance part of the lower-stage side portion 10b of the hot water supply heat exchanger 10 is formed with inner-surface machined tubes used for heat transfer tubes of the annular coil of the lower-stage side portion 10b, so that the heat transfer rate of the heat transfer tube portion is improved.

With such a construction, by virtue of the high heat transfer performance of the inner-surface machined tubes, the cooling performance (endothermic performance) for the stored water W₀ of the annular coil part of the lower-stage side portion 10b of the hot water supply heat exchanger 10 is improved, so that the temperature of the stored water W₀ in the lower-stage side portion 10b is more easily lowered.

As a result of this, the temperature of the stored water W₀ flowing through within the hot-water-supply-unit side endothermic heat exchanger 42 corresponding to the heat-pump-unit 2 side radiative heat exchanger 41 can be lowered to a corresponding extent, so that an effective temperature difference from the condensed refrigerant of the heat-pump-unit side radiative heat exchanger 41 can be ensured.

Further, the heat pump type hot water supply apparatus of this invention is so constructed that the high heat exchange performance part of the lower-stage side portion 10b of the hot water supply heat exchanger 10 is formed with the annular-coil heat transfer tubes of the lower-stage side portion 10b smaller in inner diameter than the annular-coil heat transfer tubes of the upper-stage side portion 10a, so that the flow velocity of the fluid flowing through inside the heat transfer tubes is made higher, allowing the heat transfer rate of the heat transfer tube part to be improved.

According to such a construction, since the annular-coil heat transfer tubes of the lower-stage side portion 10b of the hot water supply heat exchanger 10 are smaller in inner diameter than the annular-coil heat transfer tubes of the upper-stage side portion 10a and since the flow velocity of the fluid flowing through inside the heat transfer tubes of the lower-stage side portion 10b is higher than that of the upper-stage side portion 10a, the heat transfer rate of the heat transfer tube part of the lower-stage side portion 10b is improved. Thus, cooling performance (endothermic performance) for the stored water W₀ of the annular coil part of the lower-stage side portion 10b is improved, so that the temperature of the stored water W₀ in the lower-stage side portion 10b is more easily lowered.

As a result of this, the temperature of the stored water W₀ flowing through within the hot-water-supply-unit side endothermic heat exchanger 42 corresponding to the heat-pump-unit side radiative heat exchanger 41 can be lowered to a corresponding extent, so that an effective temperature difference from the condensed refrigerant of the heat-pump-unit side radiative heat exchanger 41 can be ensured.

Also, the heat pump type hot water supply apparatus of this invention is so constructed that the high heat exchange performance part of the lower-stage side portion 10b of the hot water supply heat exchanger 10 is formed with the annular-coil winding pitch of the lower-stage side portion 10b smaller than the annular-coil winding pitch of the upper-stage side portion 10a, so that the heat transfer area of the annular coil of the lower-stage side portion 10b is made larger than the heat transfer area of the annular coil of the upper-stage side portion 10a.

With such a construction, since the annular coil of the lower-stage side portion 10b of the hot water supply heat exchanger 10 is smaller in winding pitch than the annular coil of the upper-stage side portion 10a, the heat transfer area of the annular coil of the lower-stage side portion 10b is larger than the heat transfer area of the annular coil of the upper-stage side portion 10a. Thus, the cooling performance (endothermic performance) for the stored water W₀ of the annular coil part of the lower-stage side portion 10b is improved, so that the temperature of the stored water W₀ in the lower-stage side portion 10b is more easily lowered.

As a result of this, the temperature of the stored water W₀ flowing through within the hot-water-supply-unit side endothermic heat exchanger 42 corresponding to the heat-pump-unit side radiative heat exchanger 41 can be lowered to a corresponding extent, so that an effective temperature difference from the condensed refrigerant of the heat-pump-unit side radiative heat exchanger 41 can be ensured.

Also, the heat pump type hot water supply apparatus of this invention is so constructed that the lower part of the annular coil in the lower-stage side portion 10b of the hot water supply heat exchanger 10 is made gradually decreasing in outer diameter so as to be coiled in a spiral state.

When the lower part of the annular coil in the lower-stage side portion 10b of the hot water supply heat exchanger 10 is made gradually decreasing in outer diameter so as to be coiled in a spiral state as shown above, the annular coil of the lower-stage side portion 10b is closed with the bottom-face side opening surface of the annular coil of the lower-stage side portion 10b converged downward. As a result of this, natural convection of the stored water W₀ from below to above and from above to below is blocked, so that the water temperature on the bottom side in the hot water tank 1 is less easily increased, allowing a lowering of the water temperature to be achieved effectively.

Therefore, when this function is combined with functions fulfilled by any of the constructions described above, it becomes possible to more effectively lower the bottom-portion temperature in the hot water tank.

As a result of this, the temperature of the stored water W₀ of the bottom portion is even more easily lowered, so that the temperature of the stored water W₀ flowing through within the hot-water-supply-unit side endothermic heat exchanger 42 corresponding to the heat-pump-unit side radiative heat exchanger 41 can be lowered more effectively. Thus, an effective temperature difference from the condensed refrigerant of the radiative heat exchanger 41 can be ensured.

Also, the heat pump type hot water supply apparatus of this invention is so constructed that the lower part of the annular coil in the lower-stage side portion 10b of the hot water supply heat exchanger 10 is coiled in a planar spiral state with the annular coil gradually decreasing in outer diameter.

When the lower part of the annular coil in the lower-stage side portion 10b of the hot water supply heat exchanger 10 is coiled in a planar spiral state with the annular coil gradually decreasing in outer diameter as shown above, the bottom-face side hypothetical opening surface of the annular coil of the lower-stage side portion 10b is closed with the annular coil of the lower-stage side portion 10b converged in a planar view. As a result, natural convection of the stored water W₀ from below to above and from above to below is blocked, so that the water temperature on the bottom side in the hot water tank 1 is less easily increased, allowing a lowering of water temperature to be achieved.

Therefore, when this function is combined with functions fulfilled by any of the constructions described above, it becomes possible to more effectively lower the bottom-portion temperature in the hot water tank.

As a result of this, the temperature of the stored water W₀ of the bottom portion is even more easily lowered, so that the temperature of the stored water W₀ flowing through within the hot-water-supply-unit side endothermic heat exchanger 42 corresponding to the heat-pump-unit 2 side radiative heat exchanger 41 can be lowered more effectively. Thus, a sufficiently effective temperature difference from the condensed refrigerant of the radiative heat exchanger 41 can be ensured.

According to the construction described above, it becomes implementable to properly improve the vertical temperature distribution of water within the hot water tank as shown by an improvement example in Fig. 8, so that a sufficiently effective temperature difference from the condensed refrigerant of the radiative heat exchanger on the heat pump unit side can be ensured. Thus, the water heating performance of a heat pump type hot water supply apparatus can be improved effectively.

## Claims

1. A heat pump type hot water supply apparatus comprising:
a heat-source side heat pump unit (2) for heating water;
a hot water tank (1) for storing therein hot water heated by the heat-source side heat pump unit (2); and
a hot water supply heat exchanger (10) which is placed in the hot water tank (1) and in which water flows from lower side toward upper side of interior thereof, wherein
there is provided a difference between heat exchange performance of a lower-stage side portion (10b) and heat exchange performance of an upper-stage side portion (10a) of the hot water supply heat exchanger (10).

2. The heat pump type hot water supply apparatus as claimed in Claim 1, further comprising:
the heat-source side heat pump unit (2) having a radiative heat exchanger (41) for condensing a refrigerant to radiate heat derived from the refrigerant; and
a hot water supply unit including: the hot water tank (1) in which water (W₀) is stored; water circulation pipes (21), (22) which are communicated with bottom (1b) side and top (1a) side of the hot water tank (1) and which allow water (W₀) in the hot water tank (1) to be circulated from the bottom (1b) side to the top (1a) side in a bypass state; an endothermic heat exchanger (42) which is placed on way of the water circulation pipes (21), (22) and which is heat-absorbably coupled to the radiative heat exchanger (41) of the heat-source side heat pump unit (2); and the hot water supply heat exchanger (10) which is of an annular coil type and allows water (W₁) to flow, from outside, in thereinto and out therefrom in a flow-through state, wherein
the water (W₀) in the hot water tank (1) is heated by the radiative heat exchanger (41) of the heat-source side heat pump unit (2) via the endothermic heat exchanger (42) provided on the way of the water circulation pipes (21), (22), while the water (W₁) to be heated flowing within the hot water supply heat exchanger (10) is heated by the water (W₀) in the hot water tank (1).

3. The heat pump type hot water supply apparatus as claimed in Claim 2, wherein inner-surface machined tubes are used for annular-coil heat transfer tubes of either one of the lower-stage side portion (10b) or the upper-stage side portion (10a) of the hot water supply heat exchanger (10), whereby a heat transfer rate of heat-transfer-tube part of either one of the lower-stage side portion (10b) or the upper-stage side portion (10a) is set higher than a heat transfer rate of the other of the lower-stage side portion (10b) and the upper-stage side portion (10a).

4. The heat pump type hot water supply apparatus as claimed in Claim 2, wherein an annular-coil heat transfer tube of either one of the lower-stage side portion (10b) or the upper-stage side portion (10a) of the hot water supply heat exchanger (10) are set smaller in inner diameter than an annular-coil heat transfer tube of the other portion (10a or 10b) so that a flow velocity of water flowing through inside the heat transfer tube of the either one is enhanced, whereby a heat transfer rate of heat-transfer-tube part of the either one of the lower-stage side portion (10b) or the upper-stage side portion (10a) is improved over a heat transfer rate of the other of the lower-stage side portion (10b) and the upper-stage side portion (10a).

5. The heat pump type hot water supply apparatus as claimed in Claim 2, wherein an annular-coil winding pitch of either one of the lower-stage side portion (10b) or the upper-stage side portion (10a) of the hot water supply heat exchanger (10) is set smaller than an annular-coil winding pitch of the other portion (10a or 10b), whereby an annular-coil heat transfer area of the either one of the lower-stage side portion (10b) or the upper-stage side portion (10a) is set larger than an annular-coil heat transfer area of the other of the lower-stage side portion (10b) and the upper-stage side portion (10a).

6. The heat pump type hot water supply apparatus as claimed in Claim 1, 2, 3, 4 or 5, wherein a lower part of the annular coil in the lower-stage side portion (10b) of the hot water supply heat exchanger (10) gradually decreases in annular-coil outer diameter so as to be wound into a helical state.

7. The heat pump type hot water supply apparatus as claimed in Claim 1, 2, 3, 4 or 5, wherein a lower part of the annular coil in the lower-stage side portion (10b) of the hot water supply heat exchanger (10) gradually decreases in annular-coil outer diameter so as to be wound into a planar spiral state.

8. The heat pump type hot water supply apparatus as claimed in any one of Claims 1 to 7, wherein heat exchange performance of the lower-stage side portion (10b) of the hot water supply heat exchanger (10) is set higher than heat exchange performance of the upper-stage side portion (10a).
